# EUROPÄISCHE PATENTSCHRIFT

(11) **EP 1 210 970 B1**
(45) Veröffentlichungstag und Bekanntmachung des Hinweises auf die Patenterteilung: **18.10.2006**
(21) Anmeldenummer: 01127829.8
(22) Anmeldetag: 22.11.2001
(51) Int. Cl.: B01D 65/08

(54) **Verfahren und Vorrichtung zum Filtern**
Process and device for filtering
Procédé et dispositif pour filtrer

(30) Priorität: 28.11.2000 DE 10058939
(43) Veröffentlichungstag der Anmeldung: 05.06.2002
(73) Patentinhaber: Göttsche, Reimer, 21423 Winsen (DE)
(72) Erfinder: Göttsche, Reimer, 21423 Winsen (DE)
(74) Vertreter: Klickow, Hans-Henning

(56) Entgegenhaltungen:
- DE-A- 3 914 592
- US-A- 5 167 817
- US-A- 5 254 259
- US-A- 5 628 909
- V.MAVROV ET AL: "an investigation on the configuration of inserts in tubular ultrafiltration module to control concentration polarization" JOURNAL OF MEMBRANE SCIENCE, Bd. 75, Nr. 1/2, 1992, Seite 197-201 XP000440571 amsterdam,nl
- PATENT ABSTRACTS OF JAPAN vol. 0122, no. 97, 12. August 1988 (1988-08-12) & JP 63 065908 A (KURITA WATER IND LTD), 24. März 1988 (1988-03-24)
- PATENT ABSTRACTS OF JAPAN vol. 0132, no. 08 (C-596), 16. Mai 1989 (1989-05-16) & JP 01 027604 A (SAITAMA PREF GOV TOU SEISOU KUMIAI), 30. Januar 1989 (1989-01-30)

## Beschreibung

Die Erfindung betrifft ein Verfahren zum Filtern, bei dem ein zu filterndes Fluid mit einer Hauptströmgeschwindigkeit durch einen Zuführraum mindestens einer rohrartig verlaufenden Membran hindurchgeleitet wird und bei dem eine Ableitung von gefiltertem Permeat durch einen die Membran umgebenden Sammelraum hindurch erfolgt.

Die Erfindung betrifft darüber hinaus eine Vorrichtung zum Filtern, die mindestens eine rohrartig verlaufende Membran aufweist, die mindestens bereichsweise von einem Sammelraum umgeben ist.

Strömungsmedien, die mit Fremdstoffen angereichert sind, werden häufig mit Verfahren der Microfiltration, der Ultrafiltration oder der Nanofiltration behandelt, um die Fremdstoffe abzutrennen. Bei derartigen Filtrationsverfahren werden in der Regel Membrane eingesetzt. Typischerweise werden diese Membrane in Form von Monokanalmembranen, die eine rohrförmige Gestaltung aufweisen, eingesetzt.

Ein typischer Verfahrenslauf erfolgt dadurch, daß das mit Fremdstoffen angereicherte Fluid in den von der rohrförmigen Membran umgebenen Innenraum geleitet wird. Das gereinigte Medium kann die Membran als Permeat passieren, die Fremdstoffe werden hingegen von der Membran als Konzentrat zurückgehalten. Zur Vermeidung einer zu starken Aufkonzentration der Rückstände innerhalb der Konzentratkammer wird typischerweise eine Teilmenge des Konzentrats aus dem System abgeleitet.

Durch die Anreicherung der Fremdstoffe innerhalb des von der Membran umgebenen Innenraumes tritt der Effekt auf, daß sich diese Fremdstoffe auch auf der Membran festsetzen und hier einen haftenden Fremdstoffbereich bilden können. Ein derartiger haftender Fremdstoffbereich wird auch als Cluster bezeichnet. Die anhaftenden Fremdstoffe führen zunächst zu einer verringerten Durchlässigkeit der Membran und haben letztlich eine vollständige Bedeckung von Teilen der Membranoberfläche und somit ein Verblocken des Membranelementes zur Folge. Ein Durchtritt von Permeat in diesen Bereichen ist nicht mehr möglich.

Zur Vermeidung eines derartigen Verblockens oder zumindest zur Erzielung einer zeitlichen Verzögerung ist es auch bereits bekannt, das Konzentrat innerhalb eines Kreislaufes zirkulierend entlang der Membranoberfläche zu führen. Hierdurch wird eine Querstromfiltration hervorgerufen, die auch als Crossflow-Filtration bezeichnet wird.

Mit Hilfe der Querstromfilterung soll erreicht werden, daß die Fremdstoffe in der Konzentratkammer möglichst lange beweglich innerhalb des Fluids gehalten werden, um ein Absetzen auf der Membranoberfläche zu vermeiden oder zumindest zu verzögern.

Ebenfalls ist es bereits bekannt, auf der Membranoberfläche abgelagerte Fremdstoffe durch ein Rückspülen zumindest teilweise wieder von der Membranoberfläche zu entfernen. Zur Durchführung eines derartigen Rückspülens wird der Filtrationsprozeß unterbrochen und die gesamte Membranfläche mit Filtrat beaufschlagt. Entsprechende Rückspülvorgänge werden beispielsweise in der DE-PS 26 29 151 sowie der DE-PS 32 35 552 erläutert.

Aus der V.MAVROV ET AL: "an investigation on the configuration of inserts in tubular ultrafiltration module to control conception polarization" JOURNAL OF MEMBRANE SCIENCE, Bd. 75, No. 1/2, 1992, Seite 197-201, XP000440571 amsterdam, nl ist bereits eine Vorrichtung mit einer rohrartig verlaufenden Membran bekannt, die von einem Sammelraum umgeben ist. Innerhalb des von der Membran begrenzten Raumes ist ein mit einem konischen Profil versehenes Strömungselement angeordnet. Das Strömungselement ist unbeweglich fixiert.

Bei der Querstromfiltration erweist es sich als nachteilig, daß sehr hohe Strömungsgeschwindigkeiten benötigt werden, die eine hohe Pumpenleistung voraussetzen. Der hohe Energiebedarf für derartige Pumpen sowie die erforderlichen Installationskosten machen eine derartige Filtrationsmethode bei einer Vielzahl von Anwendungen unwirtschaftlich.

Die Durchführung von Rückspülvorgängen weist den erheblichen Nachteil auf, daß eine Betriebsunterbrechung erfolgen muß. Während dieser Betriebsunterbrechungen steht einem nachgeschalteten Prozeß kein Filtrat zur Verfügung. Darüber hinaus wird bei einem Rückspülen die gesamte Membranfläche gleichzeitig zurückgespült, so daß lokal nur vergleichsweise geringe Reinigungskräfte bereitstehen, die in der Regel nur einen Teil der Fremdstoffe ablösen können.

Aufgabe der vorliegenden Erfindung ist es daher, ein Verfahren der einleitend genannten Art derart zu verbessern, daß eine verbesserte Reinigungseffektivität bereitgestellt wird.

Diese Aufgabe wird erfindungsgemäß dadurch gelöst, daß innerhalb des Zuführraumes der rohrartig verlaufenden Membran von einem beweglichen Strömungselement örtlich veränderlich mindestens ein Bereich erhöhter Strömungsgeschwindigkeit erzeugt wird, wobei die erhöhte Strömungsgeschwindigkeit größer als die Hauptströmgeschwindigkeit vorgegeben und mindestens bereichsweise entlang der Membran geleitet wird.

Weitere Aufgabe der vorliegenden Erfindung ist es, eine Vorrichtung der einleitend genannten Art derart zu verbessern, daß eine Reinigung der Membran ohne Unterbrechung des Filtrationsbetriebes möglich ist.

Diese Aufgabe wird erfindungsgemäß dadurch gelöst, daß innerhalb eines von der Membran begrenzten Zuführraumes ein mit einem Oberflächenprofil versehenes Strömungselement beweglich angeordnet ist.

Durch die lokale Erhöhung der Strömungsgeschwindigkeit ist es möglich, örtlich veränderliche Bereiche mit einer hohen Strömungsgeschwindigkeit bereitzustellen, die auf der Membranoberfläche abgesetzte Feststoffpartikel und andere Verunreinigungen wieder von der Membranoberfläche entfernt. Eine einfache gerätetechnische Realisierung kann dadurch erfolgen, daß durch eine Positionierung des Strömungselementes in einer Längsrichtung der rohrförmigen Membran in Abhängigkeit von einer jeweiligen Positionierung des Strömungselementes Wölbungsbereiche des Oberflächenprofils an der Membranoberfläche vorbeigeführt werden und hierdurch im Bereich des jeweiligen geringsten Abstandes zwischen dem Oberflächenprofil und der Membranoberfläche lokal die hohe Strömungsgeschwindigkeit erzeugt wird.

Zur Unterstützung einer Ablösung von Verunreinigungen wird vorgeschlagen, daß das mit der erhöhten Strömungsgeschwindigkeit fließende Fluid mindestens bereichsweise schräg zur Membran fließt.

Eine erhöhte Reinigungswirkung durch partielle Unterdruckerzeugung kann dadurch erreicht werden, daß mindestens partiell eine Verwirbelung des strömenden Fluids erzeugt wird.

Zur Vorgabe des jeweiligen Wirkungsortes der Bereiche erhöhter Strömungsgeschwindigkeit wird vorgeschlagen, daß der Ort der erhöhten Strömungsgeschwindigkeit durch eine Verschiebung eines Strömungselementes mit einem Oberflächenprofil erzeugt wird.

Eine Anreicherung von Verunreinigungen kann dadurch vermieden werden, daß lokal durch Ableitung des Fluids ein Unterdruck zur Erzeugung einer Rückströmung durch die Membran hindurch erzeugt wird.

Eine hohe Verfügbarkeit kann dadurch erreicht werden, daß die erhöhte Strömungsgeschwindigkeit zur Durchführung einer Reinigung der Membran zeitgleich mit der Durchführung des Filtervorganges erzeugt wird.

Eine gezielte Reinigung in Abhängigkeit von einem jeweiligen Verunreinigungszustand kann dadurch erfolgen, daß ein Reinigungsvorgang der Membran automatisch in Abhängigkeit von einem erfaßten Druck durchgeführt wird.

Eine möglichst gleichmäßige Abgabe von Permeat auch während der Durchführung von Reingiungsvorgängen wird dadurch unterstützt, daß während der Durchführung eines Reinigungsvorganges der Membran ein erhöhter Versorgungsdruck bereitgestellt wird.

Eine sehr gründliche Reinigung der Membran wird dadurch erreicht, daß das Fluid mit der erhöhten Strömungsgeschwindigkeit mindestens bereichsweise quer zu einer Oberfläche der Membran strömt.

Zur Verminderung eines erforderlichen Stellhubes des Strömungselementes wird vorgeschlagen, daß das Strömungselement in Richtung der Längsachse eine Mehrzahl von Außenwölbungen aufweist, die jeweils mit Abständen relativ zueinander angeordnet sind.

Ein gleichmäßiger Filtervorgang wird dadurch unterstützt, daß sich das Strömungselement zwischen den Außenwölbungen jeweils im wesentlichen mindestens bereichsweise zylinderartig erstreckt.

Zur Bereitstellung möglichst gleicher Strömungsbedingungen entlang des Umfanges der rohrartig verlaufenden Membran wird vorgeschlagen, daß die Außenwölbung das Strömungselement ringartig umgibt.

Eine einfache Ableitung abgelöster Verunreinigungen kann dadurch erfolgen, daß das Strömungselement mindestens bereichsweise hohl ausgebildet ist.

Ein Reinigungsvorgang durch lokales Rückspülen kann dadurch erreicht werden, daß mindestens zwei Außenwölbungen eine Spülmulde begrenzen.

Eine lokale Unterdruckerzeugung zur Unterstützung des Rückspülvorganges wird dadurch erreicht, daß die Spülmulde durch mindestens eine Spülausnehmung mit einem Innenraum des Strömungselement verbunden ist.

Zur Realisierung der Positionierbarkeit des Strömungselementes wird vorgeschlagen, daß zur Positionierung des Strömungselementes ein von einem Zylinder geführter Kolben verwendet ist.

Eine gesteuerte Ableitung der gelösten Verunreinigungen kann dadurch erfolgen, daß der Innenraum des Strömungselementes an ein Spülventil angeschlossen ist.

Zur Erfassung eines vom jeweiligen Verunreinigungszusstand abhängigen Druckverlaufes wird vorgeschlagen, daß zwischen einer Pumpe und der Membran ein Druckaufnehmer angeordnet ist.

Die Durchführung von Reinigungsvorgängen in Abhängigkeit von einem aktuellen Verunreinigungszustand wird dadurch unterstützt, daß der Druckaufnehmer mit einer Steuerung zur Koordinierung einer Positionierung des Strömungselementes verbunden ist.

Ein hoher wirksamer Druck bei der Durchführung von Reinigungsvorgängen wird dadurch erreicht, daß im Bereich einer Rückführleitung für das zu filternde Medium eine Sperreinrichtung angeordnet ist.

Eine gleichmäßige Strömungsführung wird dadurch unterstützt, daß mindestens eines der vom Strömungselement getragenen ringartigen Profile mit einem Spiel und von einer anliegenden Strömung selbstzentrierend auf dem Strömungselement geführt ist.

Möglichst konstante Bedingungen im Bereich der Permeatabgabe werden dadurch unterstützt, daß ein Permeataustritt des Sammelraumes an ein Druckhalteventil angeschlossen ist.

In der Zeichnung sind Ausführungsbeispiele schematisch dargestellt. Es zeigen:
- Fig. 1: ein Prinzipschaltbild einer Einrichtung zur Filterung unter Verwendung von Membranen mit geschnittener Darstellung der Filtereinrichtung,
- Fig. 2: eine vergrößerte Darstellung der Einzelheit II in Fig. 1
und
- Fig. 3: eine vergrößerte Darstellung der Einzelheit III in Fig. 1.

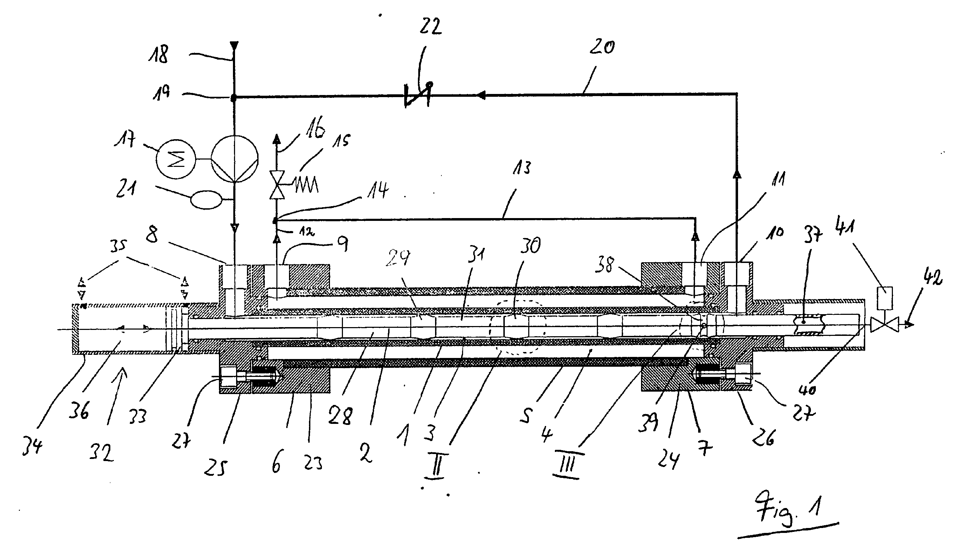

Die Vorrichtung zum Filtern gemäß der Ausführungsform in Fig. 1 weist mindestens eine Membran (1) auf, die rohrartig entlang einer Längsachse (2) verläuft und einen Zuführraum (3) begrenzt. Im Bereich ihrer dem Zuführraum (3) abgewandten Ausdehnung ist die Membran (1) von einem Sammelraum (4) umgeben, der von einem Gehäuse (5) umschlossen ist. Innerhalb des Gehäuses (5) können ein oder mehrere Membranen (1) positioniert werden.

Die Membran (1) und das Gehäuse (5) werden von Tragblöcken (6,7) gehaltert. Einer der Tragblöcke (6,7) weist einen Mediumeintritt (8) sowie einen Permeataustritt (9) auf, der andere Tragblock (6,7) ist mit einem Konzentrataustritt (10) sowie einem weiteren Permeataustritt (11) ausgestattet.

Die Permeataustritte (9,11) werden über Ableitungen (12,13) an eine Sammelstelle (14) angeschlossen, die über ein Druckhalteventil (15) mit einer Permeatableitung (16) gekoppelt ist.

Der Mediumeintritt (8) ist über eine Pumpe (17) mit einem Rohmediumeintritt (18) verbunden. Zwischen der Pumpe (17) und dem Rohmediumeintritt (18) ist eine Sammelstelle (19) angeordnet, die über eine Verbindungsleitung (20) mit dem Konzentrataustritt (10) gekoppelt ist.

Zwischen der Pumpe (17) und dem Mediumeintritt (8) ist ein Druckaufnehmer (21) positioniert und im Bereich der Verbindungsleitung (20) ist eine steuerbare Sperreinrichtung (22) angeordnet.

Die Tragblöcke (6,7) bestehen jeweils aus einer Blockbasis (23,24) sowie einem Blockdeckel (25,26), die von Schrauben (27) miteinander verbunden werden. Innerhalb des Zuführraumes (3) ist ein Strömungselement (28) geführt, das ein Oberflächenprofil (29) aufweist.

Gemäß der in Fig. 1 dargestellten Ausführungsform besteht das Oberflächenprofil (29) aus Außenwölbungen (30), die jeweils durch zylinderförmige Abstandssegmente (31) voneinander getrennt sind. Die Außenwölbungen (30) können beispielsweise durch Ringelemente realisiert werden, die in Umfangsnuten des Strömungselementes (28) gehaltert werden. Insbesondere ist daran gedacht, derartige Ringsegmente bezüglich der Längsachse (2) verschieblich auf dem Strömungselement (28) zu führen, um eine Selbstzentrierung durch die einwirkende Strömung zu erreichen.

Das Strömungselement (28) ist mit einer Positioniereinrichtung (32) verbunden. Die Positioniereinrichtung (32) kann beispielsweise als ein Kolben (33) ausgeführt sein, der innerhalb eines Zylinders (34) verschieblich ist. Der Zylinder (34) ist gemäß der Ausführungsform in Fig. 1 vom Blockdeckel (25) getragen. Zur Positionierung des Kolbens (33) wird ein Stellfluid (35), beispielsweise Hydraulikflüssigkeit, in einen Zylinderinnenraum (36) eingeleitet. Die Bewegung des Kolbens (33) wird durch koordinierte Zuleitung und Ableitung des Stellfluids (35) in die in Bewegungsrichtung vor und hinter dem Kolben (33) angeordneten Teilbereiche des Zylinderinnenraumes (36) erreicht.

Das Strömungselement (28) kann rohrartig hohl ausgebildet werden. Durch einen Innenraum (37) des Strömungselementes (28) hindurch können hierdurch während der Durchführung des Reinigungsvorganges abgelöste Verunreinigungspartikel abgeleitet werden. Für eine derartige Ableitung ist es insbesondere vorteilhaft, wenn zwei Außenwölbungen (30) in Richtung der Längsachse (2) mit einem geringen Abstand zueinander angeordnet und von einer Spülmulde (38) voneinander getrennt werden. Eine derartige Spülmulde (38) kann von einer Spülausnehmung (39) mit dem Innenraum (37) des Strömungselementes (28) verbunden werden.

Ein Spülwasseraustritt (40) des Strömungselementes (28) ist über ein Spülventil (41) an eine Ableitung (42) angeschlossen.

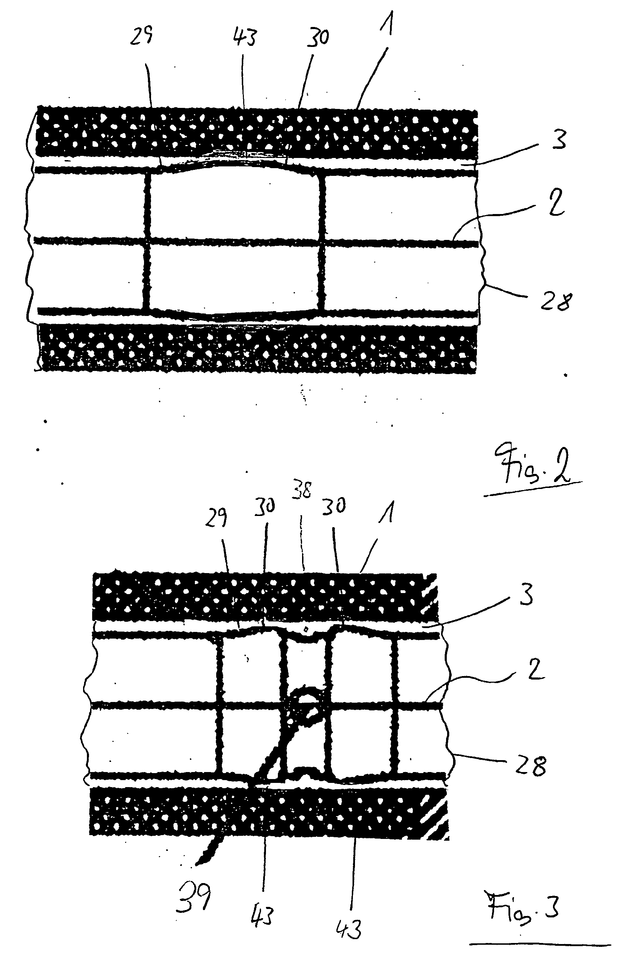

Fig. 2 zeigt eine vergrößerte Darstellung zur Veranschaulichung einer Anordnung des Oberflächenprofils (29) relativ zur Membran (1). Es ist erkennbar, daß sich die Außenwölbung (30) bis in eine unmittelbare Nähe der Membran (1) erstreckt, so daß nur ein schmaler Spalt (43) frei bleibt, durch den das Fluid hindurchströmt. Durch diese Konstruktion wird lokal eine hohe Strömungsgeschwindigkeit in Richtung der Längsachse (2) erzeugt, um an der Membran (1) anhaftende Verunreinigungen zu entfernen.

Fig. 3 zeigt eine vergrößerte Darstellung der Ausführungsform mit zwei relativ dicht aufeinander folgenden Außenwölbungen (30), zwischen denen die Spülmulde (38) angeordnet ist. Durch diese Ausführungsform werden sowohl eine hohe Strömungsgeschwindigkeit zum Wegspülen von Verunreinigungen in Richtung der Längsachse (2) als auch quer zur Längsachse (3) ausgerichtete Strömungskomponenten erzeugt. Durch Auftreten lokaler Verwirbelungen können darüber hinaus Unterdruckeffekte zur Erzeugung einer Rückspülung durch die Membran (1) hindurch hervorgerufen werden. Bei einer Kombination der Spülmulde (38) mit einer Spülausnehmung (39), die eine Verbindung mit dem Innenraum (37) des

Strömungselementes (28) herstellt, ist es darüber hinaus möglich, durch die partielle Wegleitung der Strömung einen verstärkten Unterdruck im Bereich der Spülmulde (38) zu erzeugen, der lokal Permeat aus dem Sammelraum (4) zurücksaugt und hierdurch einen lokalen Rückspüleffekt in der Membran (1) erzeugt. Die Rückspülung wird somit nur in einer unmittelbaren Umgebung der Spülmulde (38) durchgeführt, die weiteren Bereiche der Membran (1) stehen hingegen für den normalen Filtrationsprozeß zur Verfügung. Es tritt somit keine Betriebsunterbrechung ein.

Für eine Optimierung des Betriebsablaufes ist insbesondere daran gedacht, die Reinigungsvorgänge nur bedarfsabhängig durchzuführen. Mit zunehmender Verunreinigung der Membran (1) nimmt der Druck zwischen der Pumpe (17) und der Membran (1) zu. über den ' Druckaufnehmer (21) kann dieser Druck erfaßt werden und bei Erreichen eines vorgebbaren Schwellwertes wird der Reinigungsvorgang von einer zugeordneten Steuerung in Gang gesetzt. Darüber hinaus ist daran gedacht, während der Durchführung des Reinigungsvorganges von der Pumpe (17) einen erhöhten Förderdruck bereitstellen zu lassen, um den durch die Ausspülung auftretenden Druckverlust im System zu kompensieren. Hierdurch werden im Bereich der Permeatableitung (16) zeitlich annäherungsweise konstante Bedingungen erreicht.

Für eine optimale Durchführung des Spülvorganges erweist es sich als vorteilhaft, zusätzlich zu einer Öffnung des Spülventils (41) die Sperreinrichtung (22) im Bereich der Verbindungsleitung (20) zu schließen, um eine hohe Strömungsgeschwindigkeit durch die Spülausnehmung (39) hindurch und somit einen hohen wirksamen Unterdruck zu erreichen.

## Patentansprüche

1. Verfahren zum Filtern, bei dem ein zu filterndes Fluid mit einer Hauptströmgeschwindigkeit durch einen Zuführraum (3) mindestens einer rohrartig verlaufenden Membran (1) hindurchgeleitet wird, und bei dem eine Ableitung von gefiltertem Permeat durch einen die Membran (1) umgebenden Sammelraum (4) hindurch erfolgt, **dadurch gekennzeichnet, daß** innerhalb des Zuführraumes (3) der rohrartig verlaufenden Membran (1) von einem beweglichen Strömungselement (28) örtlich veränderlich mindestens ein Bereich erhöhter Strömungsgeschwindigkeit erzeugt wird, wobei die erhöhte Strömungsgeschwindigkeit größer als die Hauptgeschwindigkeit vorgegeben und mindestens bereichsweise entlang der Membran (1) geleitet wird.

2. Verfahren nach Anspruch 1, **dadurch gekennzeichnet, daß** das mit der erhöhten Strömungsgeschwindigkeit fließende Fluid mindestens bereichsweise schräg zur Membran (1) fließt.

3. Verfahren nach Anspruch 1 oder 2, **dadurch gekennzeichnet, daß** mindestens partiell eine verwirbelung des strömenden Fluids erzeugt wird.

4. Verfahren nach einem der Ansprüche 1 bis 3, **dadurch gekennzeichnet, daß** der Ort der erhöhten Strömungsgeschwindigkeit durch eine Verschiebung eines Strömungselementes (28) mit einem Oberflächenprofil (29) erzeugt wird.

5. Verfahren nach einem der Ansprüche 1 bis 4, **dadurch gekennzeichnet, daß** lokal durch Ableitung des Fluids ein Unterdruck zur Erzeugung einer Rückströmung durch die Membran (1) hindurch erzeugt wird.

6. Verfahren nach einem der Ansprüche 1 bis 5, **dadurch gekennzeichnet, daß** die erhöhte Strömungsgeschwindigkeit zur Durchführung einer Reinigung der Membran (1) zeitgleich mit der Durchführung des Filtervorganges erzeugt wird.

7. Verfahren nach einem der Ansprüche 1 bis 6, **dadurch gekennzeichnet, daß** ein Reinigungsvorgang der Membran (1) automatisch in Abhängigkeit von einem erfaßten Druck durchgeführt wird.

8. Verfahren nach einem der Ansprüche 1 bis 7, **dadurch gekennzeichnet, daß** während der Durchführung eines Reinigungsvorganges der Membran (1) ein erhöhter Versorgungsdruck bereitgestellt wird.

9. Verfahren nach einem der Ansprüche 1 bis 8, **dadurch gekennzeichnet, daß** das Fluid mit der erhöhten Strömungsgeschwindigkeit mindestens bereichsweise quer zu einer Oberfläche der Membran (1) strömt.

10. Vorrichtung zum Filtern, die mindestens eine rohrartig verlaufende Membran (1) aufweist, die mindestens bereichsweise von einem Sammelraum (4) umgeben ist, **dadurch gekennzeichnet, daß** innerhalb eines von der Membran (1) begrenzten Zuführraumes (3) ein mit einem Oberflächenprofil (29) versehenes Strömungselement (28) beweglich angeordnet ist.

11. Vorrichtung nach Anspruch 10, **dadurch gekennzeichnet, daß** das Strömungselement (28) in Richtung einer Längsachse (2) der rohrartig verlaufenden Membran (1) positionierbar ist.

12. Vorrichtung nach Anspruch 10 oder 11, **dadurch gekennzeichnet, daß** das Strömungselement (28) in Richtung der Längsachse (2) eine Mehrzahl von Außenwölbungen (30) aufweist, die jeweils mit Abständen relativ zueinander angeordnet sind.

13. Vorrichtung nach einem der Ansprüche 10 bis 12, **dadurch gekennzeichnet, daß** sich das Strömungselement (28) zwischen den Außenwölbungen (30) jeweils im wesentlichen mindestens bereichsweise zylinderartig erstreckt.

14. Vorrichtung nach einem der Ansprüche 10 bis 13, **dadurch gekennzeichnet, daß** die Außenwölbung (30) das Strömungselement (28) ringartig umgibt.

15. Vorrichtung nach einem der Ansprüche 10 bis 14, **dadurch gekennzeichnet, daß** das Strömungselement (28) mindestens bereichsweise hohl ausgebildet ist.

16. Vorrichtung nach einem der Ansprüche 10 bis 15, **dadurch gekennzeichnet, daß** mindestens zwei Außenwölbungen (30) eine Spülmulde (38) begrenzen.

17. Vorrichtung nach Anspruch 16, **dadurch gekennzeichnet, daß** die Spülmulde (38) durch mindestens eine Spülausnehmung (39) mit einem Innenraum (37) des Strömungselement (28) verbunden ist.

18. Vorrichtung nach einem der Ansprüche 10 bis 17, **dadurch gekennzeichnet, daß** zur Positionierung des Strömungselementes (28) ein von einem Zylinder (34) geführter Kolben (33) verwendet ist.

19. Vorrichtung nach einem der Ansprüche 10 bis 18, **dadurch gekennzeichnet, daß** der Innenraum (37) des Strömungselementes (28) an ein Spülventil (41) angeschlossen ist.

20. Vorrichtung nach einem der Ansprüche 10 bis 19, **dadurch gekennzeichnet, daß** zwischen einer Pumpe (17) und der Membran (1) ein Druckaufnehmer (21) angeordnet ist.

21. Vorrichtung nach einem der Ansprüche 10 bis 20, **dadurch gekennzeichnet, daß** der Druckaufnehmer (21) mit einer Steuerung zur Koordinierung einer Positionierung des Strömungselementes (28) verbunden ist.

22. Vorrichtung nach einem der Ansprüche 10 bis 21, **dadurch gekennzeichnet, daß** im Bereich einer Rückführleitung (20) für das zu filternde Medium eine Sperreinrichtung (22) angeordnet ist.

23. Vorrichtung nach einem der Ansprüche 10 bis 22, **dadurch gekennzeichnet, daß** mindestens eines der vom Strömungselement (28) getragenen ringartigen Profile mit einem Spiel und von einer anliegenden Strömung selbstzentrierend auf dem Strömungselement (28) geführt ist.

24. Vorrichtung nach einem der Ansprüche 10 bis 23, **dadurch gekennzeichnet, daß** ein Permeataustritt (9) des Sammelraumes (4) an ein Druckhalteventil (15) angeschlossen ist.

## Claims

1. Filtering method, wherein a fluid to be filtered is fed at a main flow velocity through a feed chamber (3) of at least one membrane (1) which extends in a tube-like manner, and wherein diversion of filtered permeate through a collecting chamber (4) surrounding the membrane (1) takes place, **characterised in that** within the feed chamber (3) of the membrane (1) which extends in a tube-like manner, at least one region of raised flow velocity is generated by a movable flow element (28) in a locally variable manner, wherein the raised flow velocity is predetermined to be greater than the main velocity and is guided, at least in regions, along the membrane (1).

2. Method according to claim 1, **characterised in that** the fluid flowing at a raised flow velocity flows, at least in regions, inclined to the membrane (1).

3. Method according to claim 1 or 2, **characterised in that** at least partial turbulence of the flowing fluid is created.

4. Method according to one of claims 1 to 3, **characterised in that** the site of raised flow velocity is generated by displacement of a flow element (28) with a surface profile (29).

5. Method according to one of claims 1 to 4, **characterised in that** a negative pressure for generating a backflow through the membrane (1) is created locally by diversion of the fluid.

6. Method according to one of claims 1 to 5, **characterised in that** the raised flow velocity for carrying out cleaning of the membrane (1) is created simultaneously with the carrying out of the filtering procedure.

7. Method according to one of claims 1 to 6, **characterised in that** a process of cleaning the membrane (1) is automatically carried out depending on a detected pressure.

8. Method according to one of claims 1 to 7, **characterised in that** during performance of a process of cleaning the membrane (1), a raised supply pressure is made available.

9. Method according to one of claims 1 to 8, **characterised in that** the fluid with the raised flow velocity flows, at least in regions, transversely to a surface of the membrane (1).

10. Device for filtering, having at least one membrane (1) which extends in a tube-like manner, which is surrounded, at least in regions, by a collecting chamber (4), **characterised in that** movably arranged within a feed chamber (3) delimited by the membrane (1) is a flow element (28) provided with a surface profile (29).

11. Device according to claim 10, **characterised in that** the flow element (28) may be positioned in the direction of a longitudinal axis (2) of the membrane (1) which extends in a tube-like manner.

12. Device according to claim 10 or 11, **characterised in that**, in the direction of the longitudinal axis (2), the flow element (28) has a plurality of external convexities (30) which are arranged spaced apart relative to each other.

13. Device according to one of claims 10 to 12, **characterised in that** the flow element (28) extends substantially cylindrically, at least in regions, between the respective external convexities (30).

14. Device according to one of claims 10 to 13, **characterised in that** the external convexity (30) surrounds the flow element (28) in a ring-like manner.

15. Device according to one of claims 10 to 14, **characterised in that** the flow element (28) is of a hollow design, at least in regions.

16. Device according to one of claims 10 to 15, **characterised in that** at least two external convexities (30) adjoin a rinsing cavity (38).

17. Device according to claim 16, **characterised in that** the rinsing cavity (38) is linked via at least one rinsing recess (39) to an internal chamber (37) of the flow element (28).

18. Device according to one of claims 10 to 17, **characterised in that**, for positioning the flow element (28), a piston (33) guided by a cylinder (34) is used.

19. Device according to one of claims 10 to 18, **characterised in that** the internal chamber (37) of the flow element (28) is connected to a rinsing valve (41).

20. Device according to one of claims 10 to 19, **characterised in that** a pressure sensor (21) is disposed between a pump (17) and the membrane (1).

21. Device according to one of claims 10 to 20, **characterised in that** the pressure sensor (21) is linked to a control system for coordinating positioning of the flow element (28).

22. Device according to one of claims 10 to 21, **characterised in that** a shut-off apparatus (22) is arranged in the region of a feedback line (20) for the medium to be filtered.

23. Device according to one of claims 10 to 22, **characterised in that** at least one of the ring-type profiles borne by the flow element (28) is guided with play and self-centring on the flow element (28) due to an existing flow.

24. Device according to one of claims 10 to 23, **characterised in that** a permeate outlet (9) of the collecting chamber (4) is connected to a pressure-maintaining valve (15).

## Revendications

1. Procédé de filtration dans lequel un fluide à filtrer est conduit, à une vitesse d'écoulement principale, à travers une chambre d'alimentation (3) d'au moins une membrane tubulaire (1), et dans lequel un prélèvement du perméat filtré est effectué par l'intermédiaire d'une chambre de collecte (4) qui entoure la membrane (1), **caractérisé en ce que**, à l'intérieur de la chambre d'alimentation (3) de la membrane tubulaire (1) au moins une zone à vitesse d'écoulement plus élevée, localement variable, est générée par un élément d'écoulement mobile (28), la vitesse d'écoulement plus élevée étant supérieure à la vitesse principale, et se déplaçant, au moins par sections, le long de la membrane (1).

2. Procédé selon la revendication 1, **caractérisé en ce que** le fluide, s'écoulant à la vitesse d'écoulement plus élevée, s'écoule, au moins par sections, obliquement par rapport à la membrane (1).

3. Procédé selon revendication 1 ou 2, **caractérisé en ce qu'**un tourbillonnement du courant de fluide est généré au moins partiellement.

4. Procédé selon l'une des revendications 1 à 3, **caractérisé en ce que** l'endroit où existe la vitesse d'écoulement plus élevée est généré par un déplacement d'un l'élément d'écoulement (28) présentant une surface externe profilée (29).

5. Procédé selon l'une des revendications 1 à 4, **caractérisé en ce que**, localement, par prélèvement du fluide, il se crée une dépression pour la production d'un flux inverse, vers l'intérieur, à travers la membrane (1).

6. Procédé selon l'une des revendications 1 à 5, **caractérisé en ce que** la vitesse d'écoulement plus élevée pour effectuer un nettoyage de la membrane (1) est générée en même temps qu'est effectué le processus de filtration.

7. Procédé selon l'une des revendications 1 à 6, **caractérisé en ce qu'**un processus de nettoyage de la membrane (1) est exécuté automatiquement en fonction d'une pression détectée.

8. Procédé selon l'une des revendications 1 à 7, **caractérisé en ce qu'**une pression d'alimentation plus élevée est fournie pendant le déroulement d'un processus de nettoyage de la membrane (1).

9. Procédé selon l'une des revendications 1 à 8, **caractérisé en ce que** le fluide s'écoule à la vitesse d'écoulement plus élevée, au moins par sections perpendiculairement à une surface de la membrane (1).

10. Dispositif de filtration qui présente au moins une membrane tubulaire (1) qui est entourée, au moins par sections, par une chambre de collecte (4), **caractérisé en ce que**, à l'intérieur d'une chambre d'alimentation (3), limitée par la membrane (1), est agencé un élément d'écoulement (28) mobile, pourvu d'une surface externe profilée (29).

11. Dispositif selon la revendication 10, **caractérisé en ce que** l'élément d'écoulement (28) peut être positionné dans la direction d'un axe longitudinal (2) de la membrane tubulaire (1).

12. Dispositif selon revendication 10 ou 11, **caractérisé en ce que** l'élément d'écoulement (28) présente, dans la direction de l'axe longitudinal (2), plusieurs renflements externes (30) qui sont disposés à distance les uns des autres.

13. Dispositif selon l'une des revendications 10 à 12, **caractérisé en ce que** l'élément d'écoulement (28), entre les renflements (30), est sensiblement cylindrique, au moins par sections.

14. Dispositif selon l'une des revendications 10 à 13, **caractérisé en ce que** le renflement (30) entoure l'élément d'écoulement (28) à la manière d'une bague.

15. Dispositif selon l'une des revendications 10 à 14, **caractérisé en ce que** l'élément d'écoulement (28) est creux, au moins par sections.

16. Dispositif selon l'une des revendications 10 à 15, **caractérisé en ce qu'**au moins deux renflements (30) limitent une cavité de rinçage (38).

17. Dispositif selon la revendication 16, **caractérisé en ce que** la cavité de rinçage (38) est reliée à une chambre intérieure (37) de l'élément d'écoulement (28) par au moins un évidement de rinçage (39).

18. Dispositif selon l'une des revendications 10 à 17, **caractérisé en ce qu'**un piston (33) guidé par un cylindre (34) est utilisé pour le positionnement de l'élément d'écoulement (28).

19. Dispositif selon l'une des revendications 10 à 18, **caractérisé en ce que** l'espace intérieur (37) de l'élément d'écoulement (28) est raccordé à une vanne de rinçage (41).

20. Dispositif selon l'une des revendications 10 à 19, **caractérisé en ce qu'**un capteur de pression (21) est agencé entre une pompe (17) et la membrane (1).

21. Dispositif selon l'une des revendications précédentes, **caractérisé en ce que** le capteur de pression (21) est relié à une commande pour la coordination d'un positionnement de l'élément d'écoulement (28).

22. Dispositif selon l'une des revendications 10 à 21, **caractérisé en ce qu'**un dispositif d'arrêt (22) est agencé dans la zone d'une conduite de retour (20) de l'agent à filtrer.

23. Dispositif selon l'une des revendications 10 à 22, **caractérisé en ce qu'**au moins l'un des profilés annulaires, portés par l'élément d'écoulement (28) est guidé, avec du jeu et de manière autocentrée, par le flux qui l'entoure, sur l'élément d'écoulement (28).

24. Dispositif selon l'une des revendications 10 à 23, **caractérisé en ce qu'**une sortie (9) de perméat de la chambre de collecte (4) est raccordée à une soupape (15) de maintien de la pression.
